# EUROPÄISCHE PATENTANMELDUNG

(11) **EP 3 501 706 A1**
(43) Veröffentlichungstag der Anmeldung: **26.06.2019**
(21) Anmeldenummer: 17209419.5
(22) Anmeldetag: 21.12.2017
(51) Int. Cl.: B23B 51/04, B21D 39/04, B23D 65/00, B23P 15/28, B28D 1/04

(54) **VERFAHREN ZUR HERSTELLUNG EINES SCHNEIDABSCHNITTES FÜR EINE BOHRKRONE**

(71) Anmelder: HILTI Aktiengesellschaft, 9494 Schaan (LI)
(72) Erfinder: Schroeder, Florian, 7304 Maienfeld (CH); Domani, Guenter, 88138 Weissensberg (DE); Rong, Pingyan, 6800 Feldkirch (AT)
(74) Vertreter: Hilti Aktiengesellschaft Corporate Intellectual Property

(57) **Zusammenfassung**

Verfahren zur Herstellung eines Schneidabschnittes aus einem ersten geschlossenen Rohrelement (14), das in Form eines ersten Hohlzylinders ausgebildet ist, einem zweiten geschlossenen Rohrelement (15), das in Form eines zweiten Hohlzylinders ausgebildet ist, und einem oder mehreren Bohrsegmenten (16), die mit dem ersten geschlossenen Rohrelement (14) verbunden werden.

## Beschreibung

### Technisches Gebiet

Die vorliegende Erfindung betrifft ein Verfahren zur Herstellung eines Schneidabschnittes für eine Bohrkrone gemäß dem Oberbegriff des Anspruchs 1.

### Stand der Technik

WO 2014/096359 A1 offenbart einen Schneidabschnitt für eine Bohrkrone, der mit einem Bohrschaftabschnitt der Bohrkrone über eine lösbare Verbindungseinrichtung verbindbar ist. Dabei ist die lösbare Verbindungseinrichtung als kombinierte Steck-Dreh-Verbindung ausgebildet. Als "Steck-Dreh-Verbindung" werden lösbare Verbindungen zwischen einem ersten und zweiten Verbindungselement bezeichnet, die in einer Richtung eine Steckverbindung bilden und zusätzlich über eine Drehverbindung verbunden werden. Der Schneidabschnitt umfasst eine oder mehrere Bohrsegmente, einen Ringabschnitt, ein äusseres Steckelement und eine ringförmige Anschlagschulter am Übergang vom Ringabschnitt zum äusseren Steckelement.

Schneidabschnitte, die mit einer kombinierten Steck-Dreh-Verbindung verbindbar sind, werden unter dem Produktnamen "Hilti DD X-CM" vertrieben. Die Schneidabschnitte "Hilti DD X-CM" umfassen mehrere Bohrsegmente, einen Ringabschnitt und ein äusseres Steckelement, wobei sich am Übergang vom Ringabschnitt zum äusseren Steckelement eine ringförmige Anschlagschulter für die Kraftübertragung befindet. Die Drehmomentübertragung erfolgt mithilfe von Stiftelementen, die mit schlitzförmigen Ausnehmungen im äusseren Steckelement zusammenwirken. Die Schneidabschnitte "Hilti DD X-CM" werden aus einem geschlossenen Rohrelement gefertigt. Dabei wird die ringförmige Anschlagschulter durch Drehbearbeitung erzeugt und die schlitzförmigen Ausnehmungen werden durch Fräsbearbeitung erzeugt.

Nachteilig am Aufbau der bekannten Schneidabschnitte "Hilti DD X-CM" sind der hohe Fertigungsaufwand durch die Drehbearbeitung der ringförmigen Anschlagschulter und die Fräsbearbeitung der schlitzförmigen Ausnehmungen. Ausserdem ist die Materialauswahl für den Ringabschnitt und das äussere Steckelement eingeschränkt. Da die Schneidabschnitte "Hilti DD X-CM" aus einem geschlossenen Rohrelement gefertigt werden, muss hinsichtlich der Anforderungen an den Schneidabschnitt bezüglich Kraftübertragung, Drehmomentübertragung und Zugbelastungen beim Entfernen einer verklemmten Bohrkrone ein Kompromiss bei der Materialauswahl getroffen werden.

### Darstellung der Erfindung

Die Aufgabe der vorliegenden Erfindung besteht darin, bei einem Verfahren zur Herstellung eines Schneidabschnittes für eine Bohrkrone den Fertigungsaufwand bei der Herstellung des Schneidabschnittes zu reduzieren. Ausserdem soll die Funktionalität des Schneidabschnittes beim Bohren mit der Bohrkrone im Hinblick auf Kraftübertragung, Drehmomentübertragung und/oder Zugbelastungen beim Entfernen einer verklemmten Bohrkrone verbessert werden.

Diese Aufgabe wird bei dem eingangs genannten Verfahren zur Herstellung eines Schneidabschnittes für eine Bohrkrone erfindungsgemäß durch die Merkmale des unabhängigen Anspruchs 1 gelöst. Vorteilhafte Weiterbildungen sind in den abhängigen Ansprüchen angegeben.

Der mit dem erfindungsgemäßen Verfahren hergestellte Schneidabschnittes für eine Bohrkrone wird mit einem Bohrschaftabschnitt der Bohrkrone über eine lösbare Verbindungseinrichtung verbunden. Das Verfahren zur Herstellung eines Schneidabschnittes für eine Bohrkrone ist gekennzeichnet durch die Verfahrenschritte:
▪ ein erstes Blechteil, das eine erste Höhe zwischen ersten Stirnflächen, eine erste Länge zwischen ersten Stosskanten und eine erste Blechdicke aufweist, wird gefertigt, das erste Blechteil wird zu einem ersten offenen Rohrelement umgeformt und an den ersten Stosskanten zu einem ersten geschlossenen Rohrelement verbunden, wobei das erste geschlossene Rohrelement in Form eines ersten Hohlzylinders mit einer ersten äusseren Mantelfläche, einer ersten inneren Mantelfläche , einer ersten unteren Stirnfläche und einer ersten oberen Stirnfläche ausgebildet wird und eine erste Hohlzylinderhöhe, einen ersten Innendurchmesser und einen ersten Aussendurchmesser aufweist,
▪ ein zweites Blechteil, das eine zweite Höhe zwischen zweiten Stirnflächen, eine zweite Länge zwischen zweiten Stosskanten und eine zweite Blechdicke aufweist, wird gefertigt, das zweite Blechteil wird zu einem zweiten offenen Rohrelement umgeformt und an den zweiten Stosskanten zu einem zweiten geschlossenen Rohrelement verbunden, wobei das zweite geschlossene Rohrelement in Form eines zweiten Hohlzylinders mit einer zweiten äusseren Mantelfläche, einer zweiten inneren Mantelfläche, einer zweiten unteren Stirnfläche und einer zweiten oberen Stirnfläche ausgebildet wird und eine zweite Hohlzylinderhöhe, einen zweiten Innendurchmesser und einen zweiten Aussendurchmesser aufweist, wobei der erste Innendurchmesser kleiner als der zweite Innendurchmesser ist und der erste Aussendurchmesser grösser oder gleich dem zweiten Aussendurchmesser ist,
▪ die erste obere Stirnfläche des ersten geschlossenen Rohrelementes wird mit der zweiten unteren Stirnfläche des zweiten geschlossenen Rohrelementes verbunden und
▪ ein oder mehrere Bohrsegmente werden mit dem ersten geschlossenen Rohrelement verbunden.

Der Schneidabschnitt, der mithilfe des erfindungsgemässen Verfahrens hergestellt wird, umfasst eine erstes geschlossenes Rohrelement, ein zweites geschlossenes Rohrelement und mindestens ein Bohrsegment. Das erste geschlossene Rohrelement ist in Form eines ersten Hohlzylinders ausgebildet und umfasst eine erste äussere Mantelfläche, eine erste innere Mantelfläche, eine erste untere Stirnfläche und eine erste obere Stirnfläche. Das zweite geschlossene Rohrelement ist in Form eines zweiten Hohlzylinders ausgebildet und umfasst eine zweite äussere Mantelfläche, eine zweite innere Mantelfläche, eine zweite untere Stirnfläche und eine zweite obere Stirnfläche. Die Verbindung zwischen dem ersten geschlossenen Rohrelement und dem zweiten geschlossenen Rohrelement erfolgt über die erste obere Stirnfläche und die zweite untere Stirnfläche; die erste obere Stirnfläche und zweite untere Stirnfläche können beispielsweise durch Schweissen verbunden werden. Die Bohrsegmente können mit dem ersten geschlossenen Rohrelement verschweißt, verlötet, verschraubt oder in einer anderen geeigneten Befestigungsart am ersten geschlossenen Rohrelement befestigt werden.

Der Schneidabschnitt ist so aufgebaut, dass die Kraftübertragung auf den Schneidabschnitt über das erste geschlossene Rohrelement und die Drehmomentübertragung auf den Schneidabschnitt über das zweite geschlossene Rohrelement erfolgt. Da der erste Innendurchmesser des ersten geschlossenen Rohrelementes kleiner als der zweite Innendurchmesser des zweiten geschlossenen Rohrelementes ist, bildet die erste obere Stirnfläche an der Innenseite des Schneidabschnittes eine ringförmige Anschlagschulter, die zur Kraftübertragung verwendet wird. Ein Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten geschlossenen Rohrelement zusammenwirken. Durch die Trennung des Schneidabschnittes in das erste geschlossene Rohrelement und das zweite geschlossene Rohrelement können die unterschiedlichen Anforderungen an den Schneidabschnitt im Hinblick auf die Kraftübertragung und Drehmomentübertragung berücksichtigt werden.

Durch die Trennung des Schneidabschnittes in das erste geschlossene Rohrelement und das zweite geschlossene Rohrelement kann ausserdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste und zweite geschlossene Rohrelement sind als Hohlzylinder mit kreisringförmigen Querschnitten ausgebildet und weisen eine konstante Materialstärke auf. Das erste geschlossene Rohrelement kann aus einem ersten ebenen Blechteil hergestellt werden, das zu einem ersten offenen Rohrelement umgeformt wird und an ersten Stosskanten stoffschlüssig oder formschlüssig verbunden wird. Das zweite geschlossene Rohrelement kann aus einem zweiten ebenen Blechteil hergestellt werden, das zu einem zweiten offenen Rohrelement umgeformt wird und an zweiten Stosskanten stoffschlüssig oder formschlüssig verbunden wird.

Das erste geschlossene Rohrelement wird aus dem ersten Blechteil hergestellt, das zum ersten offenen Rohrelement umgeformt wird und an den ersten Stosskanten verbunden wird. Als Umformverfahren für das erste Blechteil eignen sich Kaltumformverfahren und Warmumformverfahren. Die Verbindung der ersten Stosskanten kann stoffschlüssig oder formschlüssig erfolgen, wobei die Stosskanten von Rohrelementen üblicherweise stoffschlüssig durch Schweissen verbunden werden. Neben der stoffschlüssigen Verbindung können die ersten Stosskanten formschlüssig verbunden werden. Das zweite geschlossene Rohrelement wird aus dem zweiten Blechteil hergestellt, das zum zweitten offenen Rohrelement umgeformt wird und an den zweiten Stosskanten verbunden wird. Als Umformverfahren für das zweite Blechteil eignen sich Kaltumformverfahren und Warmumformverfahren. Die Verbindung der zweiten Stosskanten kann stoffschlüssig oder formschlüssig erfolgen, wobei die Stosskanten von Rohrelementen üblicherweise stoffschlüssig durch Schweissen verbunden werden. Neben der stoffschlüssigen Verbindung können die zweiten Stosskanten formschlüssig verbunden werden.

Bevorzugt ist der erste Aussendurchmesser im Wesentlichen gleich dem zweiten Aussendurchmesser und die erste äussere Mantelfläche des ersten geschlossenen Rohrelementes und die zweite äussere Mantelfläche des zweiten geschlossenen Rohrelementes werden bündig ausgerichtet. Der Schneidaschnitt ist so aufgebaut, dass die Kraftübertragung über die erste obere Stirnfläche an der Innenseite des Schneidabschnittes erfolgt. Die erste obere Stirnfläche bildet eine ringförmige Anschlagschulter für die Kraftübertragung. Die Kraftübertragung erfolgt zwischen der ringförmigen Anschlagschulter des Schneidabschnittes und einer ringförmigen Stirnfläche eines Bohrschaftabschnittes. Durch die bündige Ausrichtung der ersten äusseren Mantelfläche und der zweiten äusseren Mantelfläche wird die verfügbare Breite bestmöglich für die ringsförmige Anschlagschulter genutzt. Der erste Aussendurchmesser und der zweite Aussendurchmesser stimmen im Rahmen von Fertigungsgenauigkeiten überein.

Bevorzugt wird im zweiten Blechteil mindestens eine schlitzförmige Ausnehmung erstellt, wobei die mindestens eine schlitzförmige Ausnehmung einen Querschlitz und einen Verbindungsschlitz umfasst und der Verbindungsschlitz den Querschlitz mit der zweiten Stirnfläche des zweiten Blechteils verbindet. Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden. Die Herstellung des zweiten geschlossenen Rohrelementes aus dem zweiten Blechteil reduziert den Fertigungsaufwand für die Herstellung der schlitzförmigen Ausnehmungen, da die schlitzförmigen Ausnehmungen durch übliche Blechbearbeitungsverfahren, wie beispielsweise Stanzen oder Schneiden, hergestellt werden können.

Besonders bevorzugt wird im zweiten Blechteil mindestens eine Quernut erstellt, wobei die mindestens eine Quernut in Höhe des Verbindungsschlitzes der mindestens einen schlitzförmigen Ausnehmung angeordnet wird. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der mindestens einen schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

Bevorzugt wird im ersten Blechteil mindestens eine Innenvertiefung erstellt, die sich über die erste Höhe des ersten Blechteils erstreckt. Die mindestens eine Innenvertiefung kann einen Transportkanal für eine Kühl- und Spülflüssigkeit bilden und ermöglicht die Ausbildung von Schneidabschnitten mit geringen Innenüberständen der Bohrsegmente auf der Innenseite des Schneidabschnittes. Die Breite, Tiefe, Form und/oder Anzahl der mindestens einen Innenvertiefung werden an die benötigte Flüssigkeitsmenge der Kühl- und Spülflüssigkeit angepasst. Die Herstellung der Innenvertiefungen im ersten Blechteil reduziert den Fertigungsaufwand, da die Innenvertiefungen durch übliche Blechbearbeitungsverfahren, wie beispielsweise Prägen oder Walzen, hergestellt werden können.

In einer bevorzugten Weiterentwicklung wird das erste geschlossene Rohrelement aus einem ersten Material und das zweite geschlossene Rohrelement aus einem zweiten Material hergestellt. Der mit dem erfindungsgemäßen Verfahren hergestellte Schneidabschnitt ist so aufgebaut, dass die Kraftübertragung auf den Schneidabschnitt über das erste geschlossene Rohrelement und die Drehmomentübertragung auf den Schneidabschnitt über das zweite geschlossene Rohrelement erfolgt. Durch die Trennung des Schneidabschnittes in das erste geschlossene Rohrelement und das zweite geschlossene Rohrelement kann die Auswahl des ersten Materials für das erste geschlossene Rohrelement und des zweiten Materials für das zweite geschlossene Rohrelement an die unterschiedlichen Anforderungen an den Schneidabschnitt im Hinblick auf die Kraftübertragung und Drehmomentübertragung angepasst werden. Ausserdem kann das zweite Material im Hinblick auf Zugbelastungen beim Entfernen einer verklemmten Bohrkrone angepasst werden.

Bevorzugt wird das erste Blechteil an den ersten Stosskanten mit mindestens einem ersten positiven Formschlusselement und mindestens einem entsprechenden ersten negativen Formschlusselement ausgebildet, wobei das mindestens eine erste positive Formschlusselement und das mindestens eine erste negative Formschlusselement formschlüssig verbunden werden. Die Verbindung der ersten Stosskanten über erste Formschlusselemente hat den Vorteil, dass kein Wärmeeintrag in das erste offene Rohrelement erfolgt, der zu Spannungen im ersten geschlossenen Rohrelement führen kann.

Bevorzugt wird das zweite Blechteil an den zweiten Stosskanten mit mindestens einem zweiten positiven Formschlusselement und mindestens einem entsprechenden zweiten negativen Formschlusselement ausgebildet, wobei das mindestens eine zweite positive Formschlusselement und das mindestens eine zweite negative Formschlusselement formschlüssig verbunden werden. Die Verbindung der zweiten Stosskanten über zweite Formschlusselemente hat den Vorteil, dass kein Wärmeeintrag in das zweite offene Rohrelement erfolgt, der zu Spannungen im zweiten geschlossenen Rohrelement führen kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Bohrkrone mit einem Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1 B);
- FIGN. 2A-C: den Schneidabschnitt der FIG. 1 bestehend aus einem ersten geschlossenen Rohrelement, einem zweiten geschlossenen Rohrelement und mehreren Bohrsegmenten in einem Längsschnitt entlang der Schnittlinie A-A in FIG. 1 A;
- FIGN. 3A, B: die Herstellung des ersten geschlossenen Rohrelementes aus einem ersten Blechteil (FIG. 3A), das zu einem ersten offenen Rohrelement umgeformt wird (FIG. 3B); und
- FIGN. 4A, B: die Herstellung des zweiten geschlossenen Rohrelementes aus einem zweiten Blechteil (FIG. 4A), das zu einem zweiten offenen Rohrelement umgeformt wird (FIG. 4B).

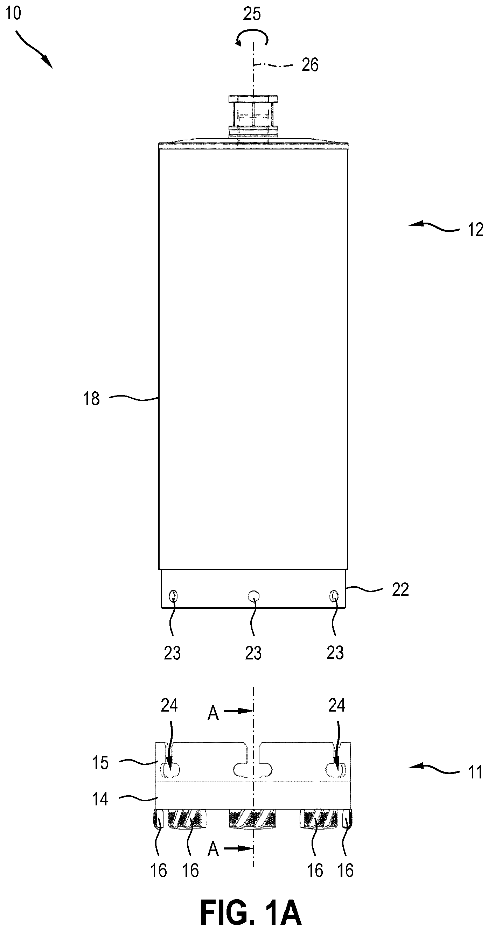

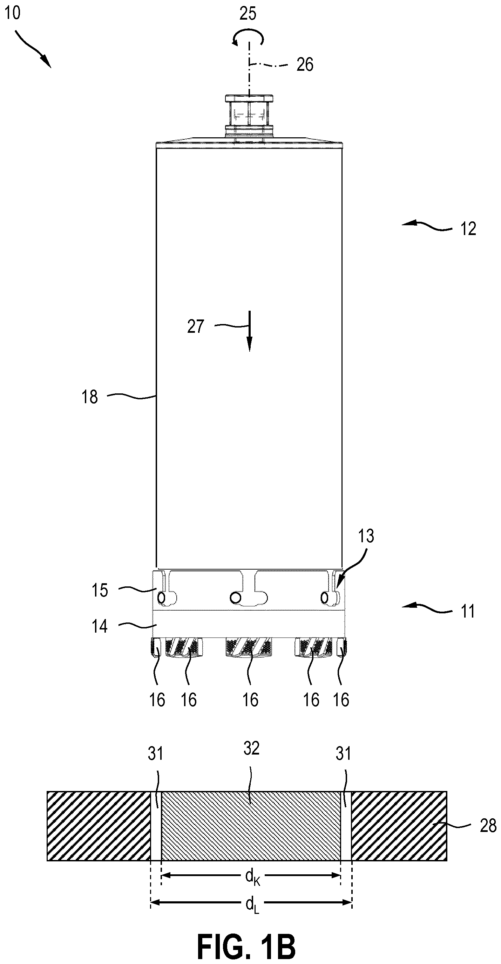

**FIGN. 1A****, B** zeigen eine Bohrkrone **10,** die einen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein erstes geschlossenes Rohrelement **14,** ein zweites geschlossenes Rohrelement **15** und mehrere Bohrsegmente **16,** die mit dem ersten geschlossenen Rohrelement 14 verbunden sind. Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes als geschlossener Bohrring ausgebildetes Bohrsegment aufweisen. Die Bohrsegmente 16 sind mit dem ersten geschlossenen Rohrelement 14 verschweißt, verlötet, verschraubt oder in einer anderen geeigneten Befestigungsart am ersten geschlossenen Rohrelement 14 befestigt. Der Bohrschaftabschnitt 12 umfasst einen rohrförmigen Bohrschaft **17,** einen Deckel **18** und ein Einsteckende **19,** über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21,** das in den Schneidabschnitt 11 integriert ist, und ein zweites Steckelement **22,** das in den Bohrschaftabschnitt 12 integriert ist. Das erste und zweite Steckelement 21, 22 bilden eine Steckverbindung und werden zusätzlich über eine Drehverbindung gesichert. Die Drehverbindung umfasst mehrere Stiftelemente **23,** die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung 25 um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d**_{L} und einen Bohrkern 32 mit einem Kerndurchmesser **d**_{K}. Die Bohrsegmente 15 bilden einen Bohrring mit einem Außendurchmesser, der dem Bohrlochdurchmesser d_{L} entspricht, und einem Innendurchmesser, der dem Kerndurchmesser d_{K} entspricht.

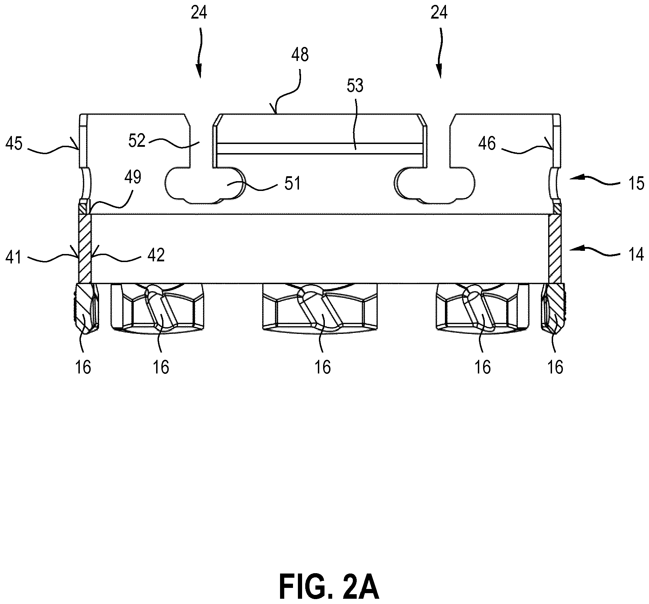

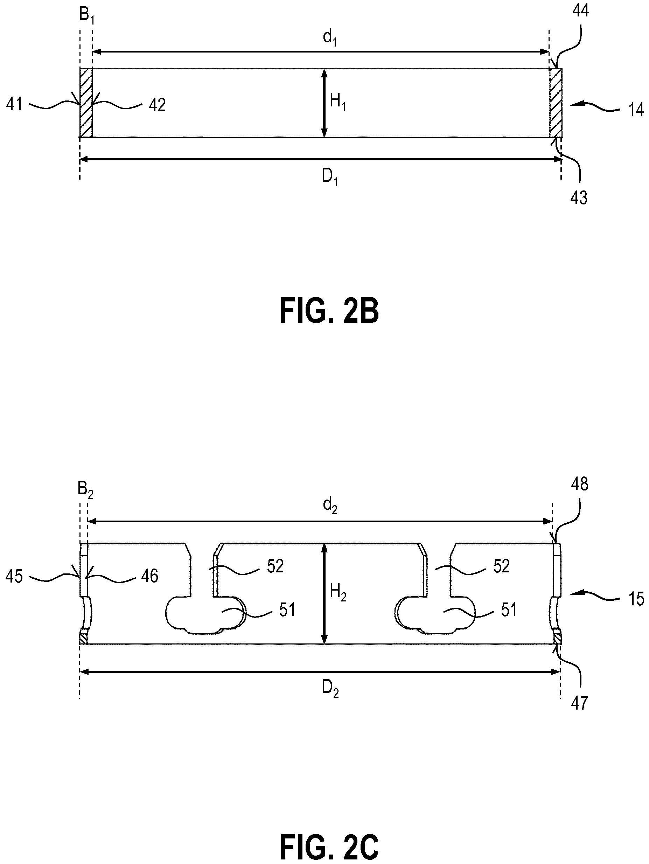

**FIGN. 2A-C** zeigen den Schneidabschnitt 11 der FIG. 1 mit dem ersten geschlossenen Rohrelement 14, dem zweiten geschlossenen Rohrelement 15 und den Bohrsegmenten 16 in einem Längsschnitt entlang der Schnittlinie A-A in FIG. 1A. FIG. 2B zeigt das erste geschlossene Rohrelement 14 und FIG. 2C das zweite geschlossene Rohrelement 15 des Schneidabschnittes 11.

Der Schneidabschnitt 11 wird aus dem ersten geschlossenen Rohrelement 14, dem zweiten geschlossenen Rohrelement 15 und den Bohrsegmenten 16 hergestellt. Das erste geschlossene Rohrelement 14 wird mit dem zweiten geschlossenen Rohrelement 15 und mit den Bohrsegmenten 16 verbunden. Dabei können die Bohrsegmente 16 mit dem ersten geschlossenen Rohrelement 14 verschweißt, verlötet, verschraubt oder in einer anderen geeigneten Befestigungsart am ersten geschlossenen Rohrelement 14 befestigt werden.

Das erste geschlossene Rohrelement 14 ist in Form eines ersten kreisförmigen Hohlzylinders ausgebildet. Das erste geschlossene Rohrelement 14 umfasst eine erste äussere Mantelfläche **41,** eine erste innere Mantelfläche **42,** eine erste untere Stirnfläche **43** und eine erste obere Stirnfläche **44.** Die Abmessungen des ersten geschlossenen Rohrelementes sind durch eine erste Hohlzylinderhöhe **H**₁, einen ersten Innendurchmesser **d**₁ und einen ersten Aussendurchmesser **D**₁ definiert. Die Breite des ersten geschlossenen Rohrelementes 14 ergibt sich als halbe Differenz des ersten Aussendurchmessers D₁ und des ersten Innendurchmessers d₁ und wird als erste Breite **B**₁ bezeichnet.

Das zweite geschlossene Rohrelement 15 in Form eines zweiten kreisförmigen Hohlzylinders ausgebildet. Das zweite geschlossene Rohrelement 15 umfasst eine zweite äussere Mantelfläche **45,** eine zweite innere Mantelfläche **46,** eine zweite untere Stirnfläche **47** und eine zweite obere Stirnfläche **48.** Die Abmessungen des zweiten geschlossenen Rohrelementes 15 sind durch eine zweite Hohlzylinderhöhe **H**₂, einen zweiten Innendurchmesser **d**₂ und einen zweiten Aussendurchmesser **D**₂ definiert. Die Breite des zweiten geschlossenen Rohrelementes 15 ergibt sich als halbe Differenz des zweiten Aussendurchmessers D₂ und des zweiten Innendurchmessers d₂ und wird als zweite Breite **B**₂ bezeichnet.

Der erste Aussendurchmesser D₁ des ersten geschlossenen Rohrelementes 14 und der zweite Aussendurchmesser D₂ des zweiten geschlossenen Rohrelementes 15 stimmen im Wesentlichen überein. Dabei bedeutet die Einschränkung "im Wesentlichen", dass der erste Aussendurchmesser D₁ und der zweite Aussendurchmesser D₂ im Rahmen von Fertigungsgenauigkeiten übereinstimmen. Im verbundenen Zustand sind die erste äussere Mantelfläche 41 des ersten geschlossenen Rohrelementes 14 und die zweite äussere Mantelfläche 45 des zweiten geschlossenen Rohrelementes 15 bündig ausgerichtet und das erste geschlossene Rohrelement 14 und das zweite geschlossene Rohrelement 15 sind miteinander verbunden. Dabei erfolgt die Verbindung über die erste obere Stirnfläche 44 des ersten geschlossenen Rohrelementes 14 und die zweite untere Stirnfläche 47 des zweiten geschlossenen Rohrelementes 15. Die Verbindung zwischen der ersten oberen Stirnfläche 44 und der zweiten unteren Stirnfläche 47 erfolgt beispielsweise durch Schweissen.

Da die erste äussere Mantelfläche 41 und die zweite äussere Mantelfläche 45 bündig ausgerichtet sind und die zweite Breite B₂ grösser als die erste Breite B₁ ist, bildet die erste obere Stirnfläche 44 des ersten geschlossenen Rohrelementes 14 an der Innenseite des Schneidabschnittes 11 eine ringförmige Anschlagschulter **49** für die Kraftübertragung von einem verbundenen Bohrschaftabschnitt. Der Schneidabschnitt 11 ist so aufgebaut, dass die Kraftübertragung vom Bohrschaftabschnitt 12 auf den Schneidabschnitt 11 über das erste geschlossene Rohrelement 14 erfolgt und die Drehmomentübertragung vom Bohrschaftabschnitt 12 auf den Schneidabschnitt 11 über das zweite geschlossene Rohrelement 15 erfolgt.

Die Drehmomentübertragung vom Bohrschaftabschnitt 12 auf den Schneidabschnitt 11 erfolgt über die Stiftelemente 23 und die schlitzförmigen Ausnehmungen 24. Das zweite geschlossene Rohrelement 15 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52,** wobei der Verbindungsschlitz 52 den Querschlitz 51 mit der zweiten oberen Stirnfläche 48 verbindet.

Das erste geschlossene Rohrelement 14 kann aus einem ersten Material und das zweite geschlossene Rohrelement 15 aus einem zweiten Material hergestellt werden. Durch die Trennung des Schneidabschnittes 11 in das erste geschlossene Rohrelement 14 und das zweite geschlossene Rohrelement 15 kann die Auswahl des ersten Materials und des zweiten Materials an die unterschiedlichen Anforderungen des ersten geschlossenen Rohrelementes 14 und des zweiten geschlossenen Rohrelementes 15 angepasst werden.

Der Schneidabschnitt 11 wird aus dem ersten geschlossenen Rohrelement 14, dem zweiten geschlossenen Rohrelement 15 und den Bohrsegmenten 16 hergestellt. Das erste geschlossene Rohrelement 14 wird an der ersten oberen Stirnfläche 44 mit der zweiten unteren Stirnfläche 47 des zweiten geschlossenen Rohrelementes 15 verbunden und an der ersten unteren Stirnfläche 43 mit den Bohrsegmenten 16 verbunden. Dabei können die Bohrsegmente 16 mit dem ersten geschlossenen Rohrelement 14 verschweißt, verlötet, verschraubt oder in einer anderen geeigneten Befestigungsart am ersten geschlossenen Rohrelement 14 befestigt werden. Die Verbindung zwischen der ersten oberen Stirnfläche 44 des ersten geschlossenen Rohrelementes 14 mit der zweiten unteren Stirnfläche 47 des zweiten geschlossenen Rohrelementes 15 erfolgt beispielsweise durch Schweissen.

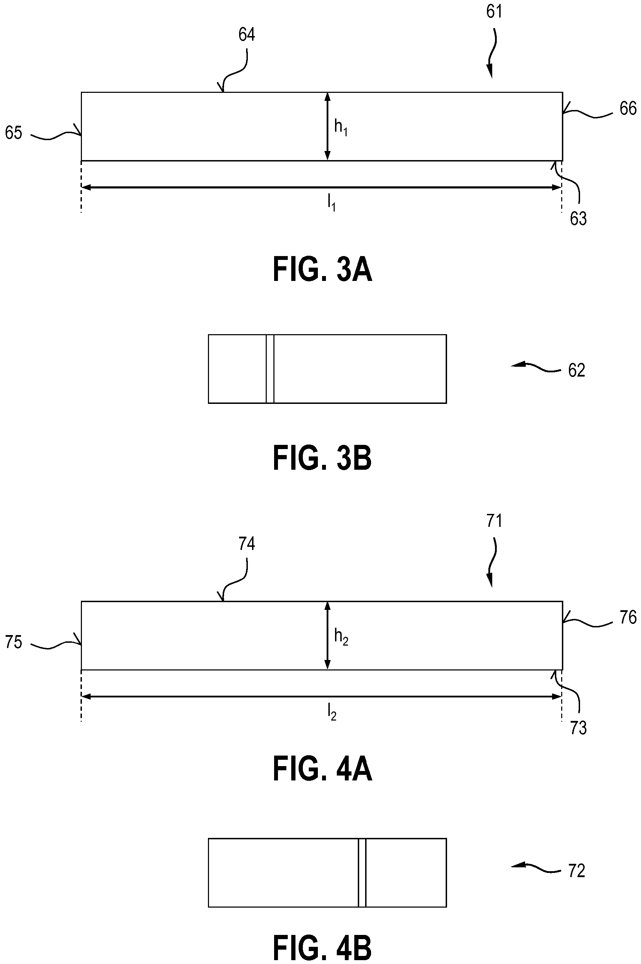

**FIGN. 3A****, B** zeigen die Herstellung des ersten geschlossenen Rohrelementes 14 aus einem ersten Blechteil **61** (FIG. 3A), das zu einem ersten offenen Rohrelement **62** umgeformt wird (FIG. 3B). Das erste Blechteil 61 wird zum ersten offenen Rohrelement 62 umgeformt und das erste offene Rohrelement 62 wird zum ersten geschlossenen Rohrelement 14 verbunden.

Das erste Blechteil 61 ist als ebenes Blechteil der ersten Blechdicke **b**₁ ausgebildet, das eine erste Höhe **h**₁ zwischen ersten Stirnflächen **63, 64** und eine erste Länge **l**₁ zwischen ersten Stosskanten **65, 66** aufweist. Das erste offene Rohrelement 62 wird an den ersten Stosskanten 65, 66 zum ersten geschlossenen Rohrelement 14 verbunden. Das erste geschlossene Rohrelement 14 unterscheidet sich von dem ersten offenen Rohrelement 62 dadurch, dass die ersten Stosskanten 65, 66 miteinander verbunden sind. Für die Verbindung der ersten Stosskanten 65, 66 eignet sich jede stoffschlüssige oder formschlüssige Verbindung.

Die ersten Stosskanten 65, 66 können durch Schweissen stoffschlüssig verbunden werden oder die ersten Stosskanten 65, 66 können mit einem ersten positiven Formschlusselement und einem entsprechenden ersten negativen Formschlusselement formschlüssig verbunden werden. Die ersten Stirnflächen 63, 64 des ersten Blechteils 61 entsprechen der ersten unteren Stirnfläche 43 und der ersten oberen Stirnfläche 44 des ersten geschlossenen Rohrelementes 14 nach dem Verbinden der ersten Stosskanten 65, 66.

**FIGN. 4A****, B** zeigen die Herstellung des zweiten geschlossenen Rohrelementes 15 aus einem zweiten Blechteil **71** (FIG. 4A), das zu einem zweiten offenen Rohrelement **72** umgeformt wird (FIG. 4B). Das zweite Blechteil 71 wird zum zweiten offenen Rohrelement 72 umgeformt und das zweite offene Rohrelement 72 wird zum zweiten geschlossenen Rohrelement 15 verbunden.

Das zweite Blechteil 71 ist als ebenes Blechteil der zweiten Blechdicke **b**₂ ausgebildet, das eine zweite Höhe **h₂** zwischen zweiten Stirnflächen **73, 74** und eine zweite Länge **l**₂ zwischen zweiten Stosskanten **75, 76** aufweist. Das zweite offene Rohrelement 72 wird an den zweiten Stosskanten 75, 76 zum zweiten geschlossenen Rohrelement 15 verbunden. Das zweite geschlossene Rohrelement 15 unterscheidet sich von dem zweiten offenen Rohrelement 72 dadurch, dass die zweiten Stosskanten 75, 76 miteinander verbunden sind. Für die Verbindung der zweiten Stosskanten 75, 76 eignet sich jede stoffschlüssige oder formschlüssige Verbindung.

Die zweiten Stosskanten 75, 76 können durch Schweissen stoffschlüssig verbunden werden oder die zweiten Stosskanten 75, 76 können mit einem zweiten positiven Formschlusselement und einem entsprechenden zweiten negativen Formschlusselement formschlüssig verbunden werden. Die zweiten Stirnflächen 73, 74 des zweiten Blechteils 71 entsprechen der zweiten unteren Stirnfläche 47 und der zweiten oberen Stirnfläche 48 des zweiten geschlossenen Rohrelementes 15 nach dem Verbinden der zweiten Stosskanten 75, 76.

Bevor das zweite Blechteil 71 zum zweiten offenen Rohrelement 72 umgeformt wird, werden die schlitzförmigen Ausnehmungen 24 und/oder die Quernut 53 im zweiten Blechteil 71 erzeugt. Die schlitzförmigen Ausnehmungen 24 können beispielsweise durch Stanzen oder Ausschneiden erzeugt werden, die Quernut 53 kann beispielsweise durch Prägen erzeugt werden.

## Patentansprüche

1. Verfahren zur Herstellung eines Schneidabschnittes (11) für eine Bohrkrone (10), wobei der Schneidabschnitt (11) über eine lösbare Verbindungseinrichtung (13) mit einem Bohrschaftabschnitt (12) der Bohrkrone (10) verbunden wird, **gekennzeichnet durch** die Verfahrenschritte:
▪ ein erstes Blechteil (61), das eine erste Höhe (h₁) zwischen ersten Stirnflächen (63, 64), eine erste Länge (l₁) zwischen ersten Stosskanten (65, 66) und eine erste Blechdicke (b₁) aufweist, wird gefertigt, das erste Blechteil (61) wird zu einem ersten offenen Rohrelement (62) umgeformt und an den ersten Stosskanten (65, 66) zu einem ersten geschlossenen Rohrelement (14) verbunden, wobei das erste geschlossene Rohrelement (14) in Form eines ersten Hohlzylinders mit einer ersten äusseren Mantelfläche (41), einer ersten inneren Mantelfläche (42), einer ersten unteren Stirnfläche (43) und einer ersten oberen Stirnfläche (44) ausgebildet wird und eine erste Hohlzylinderhöhe (H₁), einen ersten Innendurchmesser (d₁) und einen ersten Aussendurchmesser (D₁) aufweist,
▪ ein zweites Blechteil (71), das eine zweite Höhe (h₂) zwischen zweiten Stirnflächen (73, 74), eine zweite Länge (l₂) zwischen zweiten Stosskanten (75, 76) und eine zweite Blechdicke (b₂) aufweist, wird gefertigt, das zweite Blechteil (71) wird zu einem zweiten offenen Rohrelement (72) umgeformt und an den zweiten Stosskanten (75, 76) zu einem zweiten geschlossenen Rohrelement (15) verbunden, wobei das zweite geschlossene Rohrelement (15) in Form eines zweiten Hohlzylinders mit einer zweiten äusseren Mantelfläche (45), einer zweiten inneren Mantelfläche (46), einer zweiten unteren Stirnfläche (47) und einer zweiten oberen Stirnfläche (48) ausgebildet wird und eine zweite Hohlzylinderhöhe (H₂), einen zweiten Innendurchmesser (d₂) und einen zweiten Aussendurchmesser (D₂) aufweist, wobei der erste Innendurchmesser (d₁) kleiner als der zweite Innendurchmesser (d₂) ist und der erste Aussendurchmesser (D₁) grösser oder gleich dem zweiten Aussendurchmesser (D₂) ist,
▪ die erste obere Stirnfläche (44) des ersten geschlossenen Rohrelementes (14) wird mit der zweiten unteren Stirnfläche (47) des zweiten geschlossenen Rohrelementes (15) verbunden und
▪ ein oder mehrere Bohrsegmente (16) werden mit dem ersten geschlossenen Rohrelement (14) verbunden.

2. Verfahren nach Anspruch 1, **dadurch gekennzeichnet, dass** der erste Aussendurchmesser (D₁) im Wesentlichen gleich dem zweiten Aussendurchmesser (D₂) ist und die erste äussere Mantelfläche (41) des ersten geschlossenen Rohrelementes (14) und die zweite äussere Mantelfläche (45) des zweiten geschlossenen Rohrelementes (15) bündig ausgerichtet werden.

3. Verfahren nach Anspruch 1, **dadurch gekennzeichnet, dass** im zweiten Blechteil (71) mindestens eine schlitzförmige Ausnehmung (24) erstellt wird, wobei die mindestens eine schlitzförmige Ausnehmung (24) einen Querschlitz (51) und einen Verbindungsschlitz (52) aufweist und der Verbindungsschlitz (52) den Querschlitz (51) mit der zweiten Stirnfläche (74) des zweiten Blechteils (71) verbindet.

4. Verfahren nach Anspruch 3, **dadurch gekennzeichnet, dass** im zweiten Blechteil (71) mindestens eine Quernut (53) erstellt wird, wobei die mindestens eine Quernut (53) in Höhe des Verbindungsschlitzes (52) angeordnet wird.

5. Verfahren nach Anspruch 1, **dadurch gekennzeichnet, dass** im ersten Blechteil (61) mindestens eine Innenvertiefung erstellt wird, die sich über die erste Höhe (h₁) des ersten Blechteils (61) erstreckt.

6. Verfahren nach einem der Ansprüche 1 bis 5, **dadurch gekennzeichnet, dass** das erste Blechteil (61) an den ersten Stosskanten (65, 66) mit mindestens einem ersten positiven Formschlusselement und mindestens einem entsprechenden ersten negativen Formschlusselement ausgebildet wird, wobei das mindestens eine erste positive Formschlusselement und das mindestens eine erste negative Formschlusselement formschlüssig verbunden werden.

7. Verfahren nach einem der Ansprüche 1 bis 5, **dadurch gekennzeichnet, dass** das zweite Blechteil (71) an den zweiten Stosskanten (75, 76) mit mindestens einem zweiten positiven Formschlusselement und mindestens einem entsprechenden zweiten negativen Formschlusselement ausgebildet wird, wobei das mindestens eine zweite positive Formschlusselement und das mindestens eine zweite negative Formschlusselement formschlüssig verbunden werden.
